# EUROPEAN PATENT APPLICATION

(11) **EP 3 584 862 A1**
(43) Date of publication of application: **25.12.2019**
(21) Application number: 18863035.4
(22) Date of filing: 12.09.2018
(51) Int. Cl.: H01M 4/525, H01M 4/36, H01M 4/505, H01M 10/052, H01M 10/0562

(54) **POSITIVE ELECTRODE ACTIVE MATERIAL, METHOD FOR PRODUCING SAME, POSITIVE ELECTRODE, AND LITHIUM ION BATTERY**

(30) Priority: 28.09.2017 JP 2017188547
(71) Applicant: JX Nippon Mining & Metals Corporation, Tokyo 100-8164 (JP)
(72) Inventor: TAMURA,Tomoya, Kitaibaraki-shi Ibaraki 319-1535 (JP)
(74) Representative: Yeadon IP Limited
(86) International application number: PCT/JP2018/033869
(87) International publication number: WO 2019/065254

(57) **Abstract**

Battery characteristics in all solid LIBs are improved. A positive electrode active material, the positive electrode active material comprising particles and coated layers, wherein the particles are represented by the following composition: LiₐNi_{b}Co_{c}Mn_{d}Oₑ, in which: 1.0 ≤ a ≤ 1.05; 0.8 ≤ b ≤ 0.9; 1.8 ≤ e ≤ 2.2; and b + c + d = 1; wherein the coated layers are represented by LiNbO₃, and wherein a specific surface area and a particle diameter of the positive electrode active material satisfy the following relationship: Y ≤ 3.5 × X⁻¹, in which X is the particle diameter (µm) of the active material; and Y is the specific surface area (m²/g).

## Description

### TECHNICAL FIELD

The present invention relates to a positive electrode active material, a method for producing the same, a positive electrode, and a lithium ion battery. More particularly, the present invention relates to a positive electrode active material having a high nickel content, a method for producing the same, a positive electrode, and a lithium ion battery.

### BACKGROUND ART

Current lithium ion secondary batteries often use an electrolytic solution. Since the electrolytic solution is flammable and thus has a higher risk of ignition. Therefore, as a substitute product, manufactures have been promoting development of an all solid lithium ion secondary battery (hereinafter, abbreviated as all solid LIB) using a solid electrolyte.

The all solid LIB has a lower risk of the above ignition than a conventional lithium ion secondary battery using an electrolytic solution. On the other hand, a concern about stable operation has been pointed out from the beginning of development of the all solid LIB, because lithium ions are conducted within and between particles.

Approaches to the above problems include the following means:
(1) mixing about 30% of solid electrolyte in the electrode;
(2) coating boundaries of positive electrode active material particles or positive electrode active material thin film with a Li compound; and
(3) using a solid electrolyte having higher lithium ion conductivity.

With such approaches, achievement of stable operation equivalent to that of the conventional lithium ion secondary battery is getting closer.

In relation to the above approach (2), Patent Document 1 discloses that a LiNbO₃ coated layer is provided on surfaces of LiCoO₂ powder particles. Furthermore, this document discloses a wet method (a method of using an alkoxide solution containing Nb or the like) as its means. Each of Patent Documents 2 to 3 discloses a dry method (a barrel sputtering method) as a coating method.

### CITATION LIST

### Patent Literatures

Patent Document 1: Patent No. 4982866 B
Patent Document 2: Japanese Patent Application Publication No. 2007-5073 A
Patent Document 3: Japanese Patent No. 6102859 B

### SUMMARY OF INVENTION

### Technical Problem

From the viewpoint of the active material, the above approach (2) may be a very important technique to improve output characteristics in the all solid LIB. For example, Patent Document 1 discloses a material in which a surface of LICoO₂ is coated with LiNbO₃. It can allow decreased interfacial resistance between LiCoO₂ and the solid electrolyte material, leading to increased output of the battery. Nevertheless, any capacity comparable to that of the lithium ion secondary battery using the conventional electrolyte has not been obtained.

For the purpose of further increasing the capacity, it has been considered that a substance having a large capacity as a positive electrode active material has been used in place of the known LiCoO₂ or LiNi_{1/3}Co_{1/3}Mn_{1/3}O₂. More particular, it has been considered that a substance having a molar ratio Ni / (Ni + Co + Mn) of 0.8 or more such as LiNi_{0.8}Co_{0.1}Mn_{0.1}O₂ (hereinafter, abbreviated as high nickel) has been used as a positive electrode active material.

The high nickel positive electrode active material has been regarded as being difficulty in use for the conventional lithium ion secondary battery with the electrolytic solution. Reasons for this include gelation generated during preparation of a slurry, and poor compatibility with the above electrolytic solution and lithium salt. However, according to all solid LIB, the problems as described above could be avoided. Therefore, the use of these high nickel positive electrode active materials for all solid LIB has provided increasing expectation that battery characteristics comparable to those of the conventional lithium ion secondary batteries could be ensured.

Therefore, the present inventors have tested the method of the above approach (2) for the high nickel positive electrode active material. However, although the battery itself has resulted in an improved capacity, battery characteristics comparable to those of conventional lithium ion secondary batteries could not be ensured.

The present inventors have considered causes with respect to the above problems, as follows (a) to (c):
(a) The positive electrode active material LiCoO₂ conventionally used is of a primary particle type (that is, the primary particles are less likely to further aggregate to form secondary particles) and is a very dense unit particle. Therefore, a treatment such as rolling flow coating using a solution of Li and a transition metal are effective for uniform coating.
   However, for the positive electrode active material particles containing nickel, primary particles generally aggregate to form secondary particles. Therefore, their surfaces have many irregularities, so that a thickness of the coated layer is difficult to be uniform. Further, the secondary particles are not completely dense particles, so that the coating solution penetrates inside the active material particles. As a result, the residual solution inside the particles forms a gas during calcination, so that the coated layer tends to be porous. It is considered that these are one of causes and only about 60% to 70% of the capacity of the conventional lithium ion can be obtained.
   However, this means that the above problems may be solved if the secondary particles are successfully controlled such that they are dense and the specific surface area is decreased.
(b) In some dry coating methods, LiNbO₃ particles that will be a coating material can be merely decreased to a submicron size. For this reason, a decreased amount of coating leads to LiNbO₃ coating merely in a form of island. Further, an increased amount of coating allows coating of substantially the entire surface, but it results in an excessively thicker coated layer. When a material having such a thicker coated layer is used as a positive electrode active material, the all solid LIB will have a capacity that is only about half the capacity of the conventional lithium ion secondary battery.
(c) The conventional sol-gel method carries out hydrolysis using water during coating, so that high nickel is decomposed by the water. This results in a capacity that is about half the capacity of the conventional lithium ion secondary battery, leading to poor cycle characteristics.

Therefore, an object of the present invention is to provide LiNbO₃-coated high nickel as a positive electrode active material, which cannot be achieved by applying the conventional coating method (e.g., the sol-gel method) as it is, and hence to achieve improvement of battery characteristics in the all solid LIB.

### Solution to Problem

As a result of further intensive studies, the present inventors have found that by performing a certain heat treatment, secondary particles can be made dense and the specific surface area of the particles can be decreased. The present inventors have also found that the formation of the dense secondary particles can suppress impregnation of the interior of the secondary particles with a coating component. Therefore, the present inventors have shown that any porous coated layer can be avoided. Based on the above findings, the present invention is specified as follows:

### (Invention 1)

A positive electrode active material, the positive electrode active material comprising particles and coated layers,
wherein the particles are represented by the following composition:

LiₐNi_{b}Co_{c}Mn_{d}Oₑ,

in which:
1.0 ≤ a ≤ 1.05;
0.8 ≤ b 0.9;
1.8 ≤ e ≤ 2.2; and
b + c + d = 1;
wherein the coated layers are represented by LiNbO₃, and
wherein a specific surface area and a particle diameter of the positive electrode active material satisfy the following relationship:
Y ≤ 3.5 × X⁻¹, in which X is the particle diameter (µm) of the active material; and Y is the specific surface area (m²/g).

### (Invention 2)

The positive electrode active material according to Invention 1, wherein the particles have D50 of from 2 to 12 µm.

### (Invention 3)

The positive electrode active material according to Invention 1 or 2, wherein the positive electrode active material satisfies the following compositional conditions:
0.05 ≤ c ≤ 0.19; and
0.01 ≤ d ≤ 0.1.

### (Invention 4)

The positive electrode active material according to any one of Inventions 1 to 3, wherein the positive electrode active material has a specific surface area of 1 m²/g or less.

### (Invention 5)

The positive electrode active material according to any one of Inventions 1 to 4, wherein the specific surface area of the positive electrode active material is lower than a specific surface area of the particles.

### (Invention 6)

A method for producing the positive electrode active material according to any one of Inventions 1 to 5, the method comprising the steps of:
mixing raw materials of a compound having the following composition, and calcining the mixture at a temperature of from 700 °C to 800 °C for 12 to 24 hours to provide a calcined body:

   LiₐNi_{b}Co_{c}Mn_{d}Oₑ,

   in which:
   1.0 ≤ a ≤ 1.05;
   0.8 ≤ b ≤ 0.9;
   1.8 ≤ e ≤ 2.2; and
   b + c + d = 1;
grinding the calcined body to provide particles; and
coating the particles with LiNbO₃,
wherein a specific surface area of the coated positive electrode active material is lower than a specific surface area of the particles before being coated.

### (Invention 7)

The method according to Invention 6, wherein the step of coating the particles comprises coating the particles with a solution containing a LiNbO₃ precursor, and subjecting the coated particles to a heat treatment at a temperature of from 450 °C or less.

### (Invention 8)

A positive electrode for lithium ion batteries, the positive electrode comprising the positive electrode active material according to any one of Inventions 1 to 5.

### (Invention 9)

A lithium ion battery comprising the positive electrode for lithium ion batteries according to Invention 8.

### Advantageous Effects of Invention

In one aspect, the present invention uses particles having a controlled specific surface area. This can prevent the covered layer from becoming porous. Further, it can allow further improvement of the capacity of the lithium ion secondary battery.

Moreover, in one aspect, the present invention can produced the particles having a controlled lower specific surface area by subjecting Li composite compound particles to a heat treatment at a certain temperature. Furthermore, the Li composite particles are coated under specific conditions. This can decrease the specific surface area after coating. Then, the capacity of the lithium ion secondary battery can be further improved.

### DESCRIPTION OF THE PREFERRED EMBODIMENTS

Hereinafter, specific embodiments for carrying out the present invention will be described. The following descriptions are to facilitate understanding of the present invention. That is, the following embodiments are not intended to limit the scope of the present invention.

### 1. Characteristics of Positive Electrode Active Material

In one embodiment, the present invention relates to a high nickel positive electrode active material. The high nickel positive electrode active material can include particles and coated layers covering the particles. The particles may be of a Li composite compound represented by the following composition:

LiₐNi_{b}Co_{c}Mn_{d}Oₑ,

in which:
1.0 ≤ a ≤ 1.05;
0.8 ≤ b 0.9;
1.8 ≤ e ≤ 2.2; and
b + c + d = 1.

In a further embodiment, a ratio of Co and Mn present in the above compositional formula may be as follows:
0.05 ≤ c ≤ 0.19; and
0.01 ≤ d ≤ 0.1.

In a further embodiment, a ratio e of oxygen present in the compositional formula may be two.

The coated layers may also contain a compound represented by LiNbO₃. This can allow interfacial resistance between the solid electrolyte and the active material to be decreased as described above.

In one embodiment, the specific surface area of the positive electrode active material including the coated layers is 1 m²/g or less, and more preferably 0.9 m²/g or less. The specific surface area of 1 m²/g or less can suppress irregularities on surfaces of the secondary particles and can be determined to be dense particles formed. As a result, it is possible to form a lithium ion battery with improved capacity. The lower limit of the specific surface area is not particularly limited, but it is typically 0.1 m²/g or more.

As used herein, the specific surface area refers to a value measured by the following procedure:
- degassing a target substance at 150 °C for 2 hours;
- measuring the specific surface area by a BET method (one-point method) using a mixed gas of 70 at% of He and 230 at% of N as an adsorption gas with Monosorb available from Quantachrome.

In one embodiment, for a particle diameter of the positive electrode active material including the coated layers, a D50 may be from 2 to 12 µm, and more preferably from 2.5 to 10.5 µm. The above range can improve the capacity.

As used herein, the D50 refers to a value measured according to the following procedure: 50% diameter (median diameter: a particle diameter whose cumulative frequency is 50%) in a particle size distribution measured by a laser diffraction method using Microtrac MT 3000EX II from Nikkiso Co., Ltd.

In one embodiment, the particle diameter of the positive electrode active material including the coated layers and the specific surface area of the positive electrode active material including the coated layers can satisfy the following relationship:
Y ≤ 3.5 × X⁻¹, in which X is the particle diameter (µm) of the active material; and Y is the specific surface area (m²/g).

This can improve the capacity. The particle diameter of the active material in the above equation refers to a value measured by the same procedure as that of the D50 described above. The specific surface area in the above equation refers to a value measured by the above BET method.

The technical significance of the above equation will be described below. First, the density of the active material having the above composition is considered to be about 4.7 g/cm³, although the ratio of each element may somewhat vary. When the active material is a true sphere, a relationship between the particle diameter calculated from the density and the specific surface area is Y = 1.28 / X. If it is in a range that is about three times 1.28, a desired effect (for example, improvement of electric discharge capacity or the like) can be obtained.

In a further embodiment, the particle diameter and specific surface area of the particles before being coated with the coated layers preferably satisfy the following relationship: Y' ≤ 3.5 × X'⁻¹, in which X' is a particle diameter (µm) of core particles, and Y' is a specific surface area (m²/g) of the core particles.

The particle diameter of the core particles in the above equation refers to a value measured by the same procedure as that of the D50 described above. The specific surface area of the core particle in the above equation refers to a value measured by the above BET method.

Thus, it is preferable that uncoated secondary particles also satisfy the above relationship. If the above relationship is satisfied, the specific surface area after coating can be further decreased (particularly when coated by a wet coating method as described later).

In a further embodiment, it is preferable to satisfy the following relationship:
Specific Surface Area Y' of Core Particles before Coating > Specific Surface Area Y of Active Material after Coating.

That is, it is preferable that by the coating treatment, a relationship is established such that the specific surface area is further decreased. This further improves the electric discharge capacity.

### 2. Method for Producing Positive Electrode Active Material

### 2-1. Method for Producing Li Composite Compound Particles

As a method for producing the positive electrode active material for lithium ion batteries according to an embodiment of the present invention, first, a ternary composite hydroxide of Ni-Co-Mn having a Ni composition of 0.8 or more in a molar ratio or a precursor of a ternary composite hydroxide with Ni-Co-Mn is prepared. The composite hydroxide is then dry-mixed with a lithium source (Li carbonate, Li hydroxide, or the like) using a Henschel mixer or the like by adjusting a mixing ratio of each raw material, and then calcined at a temperature of from 700 °C to 800 °C for 12 to 24 hours to provide a calcined body (a positive electrode active material). The calcined body is optionally crushed using, for example, a pulverizer or the like to provide powder of the positive electrode active material.

In a further embodiment of the present invention, a calcination temperature (700 °C to 800 °C) is preferably adjusted as needed according to the composition. More particularly, the calcination temperature is preferably adjusted according to the ratio of Ni. In the present invention, as described above, the ratio b of Ni is defined in the range of from 0.8 to 0.9. For example, when the ratio of Ni is relatively low in that range, the calcination temperature is preferably set at a higher value, and when the ratio of Ni is relatively high, the calcination temperature is preferably set at a lower value. Thus, the appropriate setting of the calcination temperature according to the ratio of Ni can provide the core particles satisfying the above relational expression: Y' ≤ 3.5 × X'⁻¹.

### 2-2. Coating Method

In one embodiment, the powder can be further coated with LiNbO₃. The coating method includes wet and dry methods.

### 2-2-1. Wet Method

In one embodiment, a coating solution in the present invention can contain a precursor of a lithium niobate compound. The precursor of the lithium niobate compound is not particularly limited as long as it can obtain a lithium niobate compound by a heat treatment step as described below. Examples of the precursor include materials obtained by mixing a Li source with a Nb source. Examples of the Li source include Li alkoxide and the like. Examples of the Li alkoxide include LiOC₂H₅ and the like. Moreover, examples of the Nb source include Nb alkoxide and the like. Examples of the Nb alkoxide include Nb(OC₂H₅)₅ and the like. The solution thus produced is deposited on the surface of the oxide positive electrode active material. The method for depositing the solution is not particularly limited as long as the solution can be deposited on the surface of the oxide positive electrode active material, including, for example, a method using a coating apparatus having a rolling fluidized bed, and a method using stirring and heat drying.

The oxide positive electrode active material having the precursor-coated part can be subjected to a heat treatment in an atmosphere having a predetermined oxygen concentration. The heat treatment is preferably performed at 450 °C or less, and more preferably 400 °C or less. This can allow the specific surface area after coating to be decreased as compared with that before coating. The lower limit is not particularly defined, but it may typically be 350 °C or more. The oxygen concentration during the heat treatment is not particularly limited, but it may typically be from 25% by volume to 40% by volume. A heat treatment time may be 0.5 h or more, and more preferably 1 h or more. The upper limit value is not particularly limited, but it may typically be 2 h or less.

A thickness of the covered layer is not particularly limited, but it may be from 4 nm to 15 nm, and more typically from 5 nm to 10 nm.

In one embodiment, the positive electrode active material according to the present invention can have features in which the secondary particles are dense and have a lower specific surface area. These features can be indicated by a change in the specific surface areas before and after coating the secondary particles. That is, it can have features in which the specific surface area after coating is lower than the specific surface area before coating. The positive electrode active material having such features can exhibit that the coated layer is not porous. Thus, the capacity can be improved.

### 2-2-2. Dry Method

The coating method using the dry method includes, but is not limited to, a barrel sputtering method. In one embodiment of the method according to the present invention, the barrel sputtering can be carried out under an output condition of from 300 to 700 W using a LiNbO₃ target material.

### 3. Positive Electrode for Lithium Ion Battery and Lithium Ion Battery

Using the positive electrode active material for lithium ion batteries thus obtained, the positive electrode for lithium ion batteries can be produced according to a known method. Furthermore, a lithium ion battery can be produced according to a known method using the positive electrode.

### EXAMPLES

An average particle diameter D50 and a specific surface area were evaluated by the above method. Further, battery characteristics were evaluated as follows:

### - Evaluation of Battery Characteristics (Electrolytic Solution Battery) -

A positive electrode active material, a conductive material and a binder were weighed at a ratio of 95:5:5. The positive electrode active material and the conductive material were mixed with a solution obtained by dissolving the binder in an organic solvent (N-methylpyrrolidone) to obtain a slurry, which was coated onto an Al foil, dried and then pressed to form a positive electrode. A2032-type coin cell for evaluation using Li as a counter electrode was then prepared, and a solution obtained by dissolving 1M of LiPF₆ in EC-DMC (1:1) was used as an electrolytic solution to measure an initial capacity (25 °C, charge upper limit voltage: 4.3 V, discharge lower limit voltage: 3.0 V) obtained at an electric discharge rate of 0.05 C.

### - Evaluation of Battery Characteristics (All Solid Battery) -

A Li₂S-P2S5 (75:25 mol%) glass ceramic was used as a solid electrolyte to produce a cell as follows:
(1) weighing the positive electrode active material, the electrolyte, and acetylene black so as to have a weight ratio of 60:35:5;
(2) mixing the combined powder in the above (1) in a mortar (a total amount of about 50 mg);
(3) placing an appropriate amount of electrolyte in a jig and pressing it;
(4) placing an appropriate amount of the mixture prepared in the above (2) in the jig and pressing it;
(5) fixing an upper portion and inverting it to remove a lower punch;
(6) placing a Li-In foil as a negative electrode in the jig and fixing a lower portion; and
(7) finally fixing it with a pressure screw and tightening a sealing cap nut.

The cell was used to measure an initial capacity (25 °C, electrical charge upper limit voltage: 3.7 V, electrical discharge lower limit voltage: 2.5 V) obtained at an electric discharge rate of 0.05 C. The cell is KP-SolidCell, which is commercially available (from Hohsen Corp.).

### - Core Particle

Commercially available nickel sulfate, cobalt sulfate and manganese sulfate were mixed in the form of an aqueous solution, such that a molar ratio of Ni, Co and Mn was as shown in Table 1, and co-precipitated with an alkali (sodium hydroxide) solution with sufficiently stirring, filtrated and washed. The co-precipitation reaction method was carried out according to the conventional method. The above co-precipitated reactant was then mixed with lithium hydroxide monohydrate such that a molar ratio of Li to the total of Ni, Co and Mn (Li / (Ni + Co + Mn)) was 1.02, and calcined in a roller hearth kiln under the conditions as shown in Table 1 (a calcination time of 24 hours), and crushed using a roll mill and a pulverizer so as to have the particle diameter (D50) as shown in Table 1 to provide powder of core particles (lithium nickel cobalt manganese oxide). A specific surface area was measured by the above BET method before performing a coating treatment as described below.

### - Wet Coating

The surface of the powder of the core particles was coated with a solution containing LiOC₂H₅ and Nb(OC₂H₅)₅ using a rolling fluidized bed coating apparatus. A heat treatment was then performed under the conditions as shown in Table 1. The thickness of the coated layer was at most 10 nm. Thus, the coating step did not substantially change the micron scale particle diameter. Therefore, the particle diameter measured before coating was determined to be equal to the particle diameter after coating, and it was applied to the equation: "Y ≤ 3.5 × X⁻¹" as described below.

The specific surface area after coating, the electric discharge capacity and the like were then measured. The results are shown in Table 1.

**[Table 1]**

| Examples /Comparative Examples | Composition | | | Particle Diameter D50 (µm) | Calcination Temperature (°C) | Specific Surface Area (m²/g) of Powder (Particles) before Treatment | Surface Treatment Method | Surface Treatment Conditions | Specific Surface Area (m²/g) of Powder (Particles) after Treatment | Electrolytic Solution Cell Discharge Capacity (mAh/g) 25 °C; 0.1C; 4.3V-3.0V | All Solid Battery Discharge Capacity (mAh/g) 25 °C; 0.1C; 4.3V-3.0V |
|---|---|---|---|---|---|---|---|---|---|---|---|
| | Ni | Co | Mn | | | | | | | | |
| Example 1 | 80 | 10 | 10 | 3 µm | 780 | 0.92 | Wet | Calcined 400 °C × 1h Coating Thickness 7 nm | 0.78 | 207 | 192 |
| Example 2 | 80 | 10 | 10 | 5 µm | 780 | 0.62 | Wet | Calcined 400 °C × 1h Coating Thickness 7 nm | 0.53 | 204 | 190 |
| Example 3 | 80 | 10 | 10 | 10 µm | 800 | 0.24 | Wet | Calcined 400 °C × 1h Coating Thickness 10 nm | 0.2 | 195 | 177 |
| Example4 | 82 | 15 | 3 | 3 µm | 740 | 0.82 | Wet | Calcined 400 °C × 1h Coating Thickness 5 nm | 0.65 | 212 | 204 |
| Example 5 | 82 | 15 | 3 | 5 µm | 740 | 0.55 | Wet | Calcined 400 °C × 1h Coating Thickness 7 nm | 0.44 | 209 | 200 |
| Example 6 | 82 | 15 | 3 | 10 µm | 760 | 0.22 | Wet | Calcined 400 °C × 1h Coating Thickness 10 nm | 0.15 | 206 | 192 |
| Example 7 | 85 | 10 | 5 | 3 µm | 760 | 0.96 | Wet | Calcined 400 °C × 1h Coating Thickness 5 nm | 0.84 | 210 | 195 |
| Example 8 | 85 | 10 | 5 | 5 µm | 760 | 0.64 | Wet | Calcined 400 °C × 1h Coating Thickness 7 nm | 0.58 | 208 | 193 |
| Example 9 | 85 | 10 | 5 | 10 µm | 760 | 0.33 | Wet | Calcined 400 °C × 1h Coating Thickness 10 nm | 0.29 | 207 | 188 |
| Example 10 | 90 | 7 | 3 | 3 µm | 720 | 0.98 | Wet | Calcined 400 °C × 1h Coating Thickness 5 nm | 0.9 | 218 | 198 |
| Example 11 | 90 | 7 | 3 | 5 µm | 720 | 0.68 | Wet | Calcined 400 °C × 1h Coating Thickness 7 nm | 0.56 | 217 | 200 |
| Example 12 | 90 | 7 | 3 | 10 µm | 740 | 0.32 | Wet | Calcined 400 °C × 1h Coating Thickness 10 nm | 0.3 | 215 | 195 |
| Comparative Example 1 | 80 | 10 | 10 | 5 µm | 760 | 0.8 | Wet | Calcined 400 °C × 1h Coating Thickness 7 nm | 0.96 | 204 | 142 |
| Comparative Example 2 | 80 | 10 | 10 | 5 µm | 780 | 0.62 | Wet | Calcined 500 °C × 1h Coating Thickness 7 nm | 0.84 | 201 | 148 |
| Comparative Example 3 | 82 | 15 | 3 | 5 µm | 780 | 0.73 | Wet | Calcined 400 °C × 1h Coating Thickness 7 nm | 0.99 | 203 | 165 |
| Comparative Example 4 | 82 | 15 | 3 | 5 µm | 740 | 0.55 | Wet | Calcined 500 °C × 1h Coating Thickness 7 nm | 0.72 | 207 | 167 |
| Comparative Example 5 | 85 | 10 | 5 | 5 µm | 720 | 0.81 | Wet | Calcined 400 °C × 1h Coating Thickness 7 nm | 1.13 | 199 | 155 |
| Comparative Example 6 | 85 | 10 | 5 | 5 µm | 760 | 0.64 | Wet | Calcined 500 °C × 1h Coating Thickness 7 nm | 0.82 | 199 | 168 |
| Comparative Example 7 | 90 | 7 | 3 | 5 µm | 760 | 0.91 | Wet | Calcined 400 °C × 1h Coating Thickness 7 nm | 1.34 | 201 | 158 |
| Comparative Example 8 | 90 | 7 | 3 | 5 µm | 720 | 0.68 | Wet | Calcined 500 °C × 1h Coating Thickness 7 nm | 1.02 | 214 | 171 |

Each active material after coating in Examples 1 to 12 satisfied the relationship: Y ≤ 3.5 × X⁻¹, in which X was a particle diameter (µm) of the active material after coating treatment, and Y was a specific surface area (m²/g) after coating treatment. Further, these Examples had improved evaluation results of the battery characteristics as all solid batteries, as compared with all of Comparative Examples.

Comparative Examples 1 to 8 were carried out by the wet coating method. Comparative Examples 1, 3, 5 and 7 carried out the wet coating under the same conditions as those of Examples. However, at the time before coating, Comparative Examples did not satisfy the relationship: Y' ≤ 3.5 × X'⁻¹, in which X' was a particle diameter (µm) of core particles, and Y' was a specific surface area (m²/g). Therefore, Comparative Examples increased the specific surface areas after coating. Therefore, Comparative Examples resulted in poor battery characteristics as all solid batteries. Further, Comparative Example 1 should have a lower Ni ratio and a higher calcination temperature (from 780 °C to 800 °C, Examples 1 to 3). However, Comparative Example 1 carried out the calcination at a lower temperature of 760 °C, so that it did not satisfy the relationship: Y' ≤ 3.5 × X'⁻¹. Furthermore, Comparative Example 7 should have a higher Ni ratio and a lower calcination temperature (from 700 °C to 740 °C, Examples 10 to 12). However, Comparative Example 7 carried out the calcination at a higher temperature of 760 °C, so that it did not satisfy the relationship: Y' ≤ 3.5 × X'⁻¹. Comparative Examples 3 and 5 also did not satisfy the relationship: Y' ≤ 3.5 × X'⁻¹ for the same reasons.

Comparative Examples 2, 4, 6, 8 carried out the wet coating at a temperature higher than that of each Example. Because of the excessively high temperature, each specific surface area after coating was increased. These Comparative Examples resulted in poor battery characteristics as all solid batteries.

Finally, it is important to note that in Examples, no significant difference was found between the battery characteristics as all batteries and the battery characteristics as electrolytic solution batteries. On the other hand, in Comparative Examples, the battery characteristics as all batteries were significantly deteriorated as compared with the battery characteristics as electrolytic solution batteries.

As used herein, the word "or" includes a case where only one of options is satisfied or a case where all options are satisfied. For example, the expression "A or B" is intended to include all of a case where A is satisfied and B is not satisfied, a case where B is satisfied and A is not satisfied, and a case where A is satisfied and B is satisfied.

While the specific embodiments of the present invention have been described, the above embodiments are merely specific examples of the present invention, and the present invention is not limited to the above embodiments. For example, technical features disclosed in one of the above embodiments can be provided to the other embodiments. Further, in the particular methods, a part of steps can be replaced with the order of other steps, and an additional step may be added between two specific steps. The scope of the invention is defined by the attached claims.

## Claims

1. A positive electrode active material, the positive electrode active material comprising particles and coated layers,
wherein the particles are represented by the following composition:
LiₐNi_{b}Co_{c}Mn_{d}Oₑ,
in which:
1.0 ≤ a ≤ 1.05;
0.8 ≤ b 0.9;
1.8 ≤ e ≤ 2.2; and
b + c + d = 1;
wherein the coated layers are represented by LiNbO₃, and
wherein a specific surface area and a particle diameter of the positive electrode active material satisfy the following relationship:
Y ≤ 3.5 × X⁻¹, in which X is the particle diameter (µm) of the active material; and Y is the specific surface area (m²/g).

2. The positive electrode active material according to claim 1, wherein the particles have D50 of from 2 to 12 µm.

3. The positive electrode active material according to claims 1 or 2, wherein the positive electrode active material satisfies the following compositional conditions:
0.05 ≤ c ≤ 0.19; and
0.01 ≤ d ≤ 0.1.

4. The positive electrode active material according to any one of claims 1 to 3, wherein the positive electrode active material has a specific surface area of 1 m²/g or less.

5. The positive electrode active material according to any one of claims 1 to 4, wherein the specific surface area of the positive electrode active material is lower than a specific surface area of the particles.

6. A method for producing the positive electrode active material according to any one of claims 1 to 5, the method comprising the steps of:
mixing raw materials of a compound having the following composition, and calcining the mixture at a temperature of from 700 °C to 800 °C for 12 to 24 hours to provide a calcined body:
LiₐNi_{b}Co_{c}Mn_{d}Oₑ,
in which:
1.0 ≤ a ≤ 1.05;
0.8 ≤ b 0.9;
1.8 ≤ e ≤ 2.2; and
b + c + d = 1;
grinding the calcined body to provide particles; and
coating the particles with LiNbO₃,
wherein a specific surface area of the coated positive electrode active material is lower than a specific surface area of the particles before being coated.

7. The method according to claim 6, wherein the step of coating the particles comprises coating the particles with a solution containing a LiNbO₃ precursor, and subjecting the coated particles to a heat treatment at a temperature of from 450 °C or less.

8. A positive electrode for lithium ion batteries, the positive electrode comprising the positive electrode active material according to any one of claims 1 to 5.

9. A lithium ion battery comprising the positive electrode for lithium ion batteries according to claim 8.
